# FASCICULE DE BREVET EUROPEEN

(11) **EP 2 203 302 B1**
(45) Date de publication et mention de la délivrance du brevet: **22.02.2012**
(21) Numéro de dépôt: 08804135.5
(22) Date de dépôt: 12.09.2008
(51) Int. Cl.: B29D 30/30, B29D 30/16, B29D 30/70, B29C 70/32

(54) **Bras de pose rotatif comprenant un moyen d'appel du fil embarqué**
Drehlegearm mit einem Bord-Filamentzufuhrmittel
Rotary laying arm comprising an on-board filament feed means

(30) Priorité: 20.09.2007 FR 0706651
(43) Date de publication de la demande: 07.07.2010
(73) Titulaire: Société de Technologie MICHELIN, 63000 Clermont-Ferrand (FR); Michelin Recherche et Technique S.A., 1763 Granges-Paccot (CH)
(72) Inventeur: MARTIN, Pascal, F-63730 Corent (FR)
(74) Mandataire: Reynaud, Georges
(86) Numéro de dépôt international: PCT/EP2008/062172
(87) Numéro de publication internationale: WO 2009/037202

(56) Documents cités:
- EP-A- 0 248 301
- WO-A-2005/075180
- US-A- 3 894 906
- US-A- 5 951 815

## Description

L'invention concerne en particulier la fabrication des pneumatiques et se rapporte plus précisément à la fabrication d'armatures de renforcement.

Il est connu de l'état de la technique un procédé de fabrication dans lequel de tels renforcements sont fabriqués directement sur l'ébauche d'un pneumatique à partir d'un fil continu, par projection dudit fil à la manière d'un fouet, et non plus sous forme de nappes que l'on incorpore lors de l'assemblage du pneumatique.

Le terme fil doit être compris dans un sens tout à fait général, englobant un mono filament, un multi filament, un câblé ou un retors ou un assemblage équivalent, et ceci, quelle que soit la matière de nature textile ou métallique constituant le fil ou le traitement qu'il pourrait subir, par exemple un traitement de surface pour favoriser sa liaison intime avec du caoutchouc, voire encore un traitement de gommage entourant ledit fil d'une couche de caoutchouc pour permettre son adhésion directe sur le support lors de sa projection.

Un tel dispositif est décrit dans la publication EP 248 301. La figure 1 illustre les organes principaux qui composent ce type d'appareil.

Le fil 1 est introduit dans le dispositif depuis une source d'alimentation (non représentée). L'appareil projette des tronçons de fil sur une surface de réception qui peut être formée indifféremment par le sommet d'une ébauche de pneumatique ou encore par un anneau de support séparé ou bien encore par une surface plane.

Ledit dispositif comprend :
- un moyen d'appel 11 du fil 1 à partir d'une source de fil,
- un conduit rotatif 2 fixé sur un arbre creux 20 constituant l'axe de rotation RR' dudit conduit, de manière telle que l'extrémité radiale extérieure 21 du conduit rotatif soit orientée sensiblement radialement par rapport à l'axe de rotation RR', ledit conduit 2 recevant le fil 1 par l'extrémité centrale 25 de l'arbre creux dans lequel il pénètre en suivant un parcours se confondant avec l'axe de rotation RR' en provenance desdits moyens d'appel, ledit fil sortant par ladite extrémité radiale extérieure 21, lesdits moyens d'appel contrôlant la vitesse linéaire d'avance du fil à l'intérieur dudit conduit rotatif 2,
- des moyens pour entraîner en rotation l'ensemble rotatif comprenant l'arbre creux et ledit conduit rotatif à une vitesse ω donnée,
- des moyens 31 pour sectionner le fil et agissant sur le fil de façon à libérer un tronçon de fil à chaque tour dudit conduit rotatif.

Un tel dispositif est décrit aussi dans la publication US5951815-A.

Plus particulièrement, l'invention s'intéresse au moyen d'appel du fil. Ce moyen d'appel a pour objet, à chaque tour effectué par le conduit rotatif, de délivrer à l'entrée dudit conduit rotatif une quantité donnée de fil provenant d'une source externe telle que, par exemple, une bobine.

Le moyen d'appel, selon l'art antérieur connu, est formé par des poulies d'entraînement 11 dont l'axe de rotation est perpendiculaire à l'axe du fil 1. Les poulies sont disposés de sorte que le fil soit aligné précisément sur l'axe de rotation RR' de l'ensemble rotatif lorsque le fil pénètre dans l'arbre creux 20. Les poulies d'entraînement sont entraînés en rotation par un moteur 12 à une vitesse contrôlée de manière à conférer au fil une vitesse linéaire d'appel égale à la longueur d'un tronçon à chaque fois que le conduit rotatif effectue un tour complet autour de l'axe RR'. Le moyen d'appel est monté sur un bâti, fixe par rapport au conduit rotatif, et placé en règle générale à proximité immédiate de l'entrée 25 de l'arbre creux.

Selon cet art antérieur connu, le fil, dont le parcours au niveau de l'entrée 25 se confond avec l'axe de rotation RR', passe de l'arbre creux 20 dans le conduit rotatif 2 par l'intermédiaire d'un coude à angle droit.

Le fil est entraîné vers la sortie 21 sous l'effet combiné de la force centrifuge qui a tendance à l'extraire, et de l'action des poulies 11 du moyen d'appel qui ont pour effet de le pousser. Aussi, le parcours du fil à l'intérieur du tube creux et du conduit rotatif est relativement facile à maîtriser lorsque l'on met en oeuvre des fils de nature métalliques qui peuvent subir une certaine mise en compression sans « flamber ». Toutefois, on observe que la mise en ouvre des fils textiles est sensiblement plus difficile à réaliser, en ce que le fil peine à franchir le coude entre l'arbre creux et le conduit rotatif en raison des forces de frottement contre la paroi interne du conduit et du coude. Le fil se replie alors sur lui-même, ce qui provoque l'obturation du conduit, et le blocage de l'installation.

L'invention a pour objet de supprimer ce problème.

Une solution, selon l'invention, comme spécifié dans la revendication 1, consiste à placer au moins une poulie motorisée, portée par l'arbre creux, dont la circonférence est tangente à l'axe de la partie du conduit rotatif s'étendant radialement, et autour de laquelle le fil est embarré avant de s'engager directement vers l'entrée du conduit rotatif lorsque le dispositif est en fonctionnement. On entend par directement le fait qu'aucun élément mécanique ne vient en contact avec le fil entre la poulie motorisée et l'entrée du conduit rotatif.

Des formes avantageuses de l'invention font l'objet des revendications dépendantes.

La poulie motorisée est animée d'un mouvement rotatif apte à conférer au fil la vitesse correspondant à la longueur d'un tronçon par tour du conduit rotatif de manière à contrôler la vitesse d'avance du fil dans le dispositif et faire office de moyen d'appel.

Cette disposition permet donc de tirer le fil depuis le moyen de stockage du fil à travers l'entrée dans le dispositif par l'axe de l'arbre creux jusqu'à l'entrée du conduit rotatif, et de délivrer le fil directement à l'entrée du conduit rotatif en évitant la présence d'un élément coudé entre le tube creux et le conduit rotatif. Les frottements à l'intérieur du conduit rotatif seul sont suffisamment minimes pour ne pas perturber la course du fil à l'intérieur dudit conduit, ce qui autorise la mise en oeuvre de fils textiles sans avoir à souffrir des inconvénients évoqués ci-dessus.

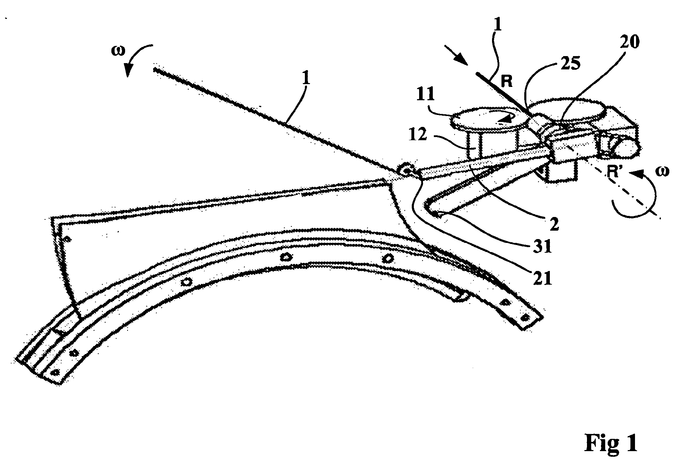

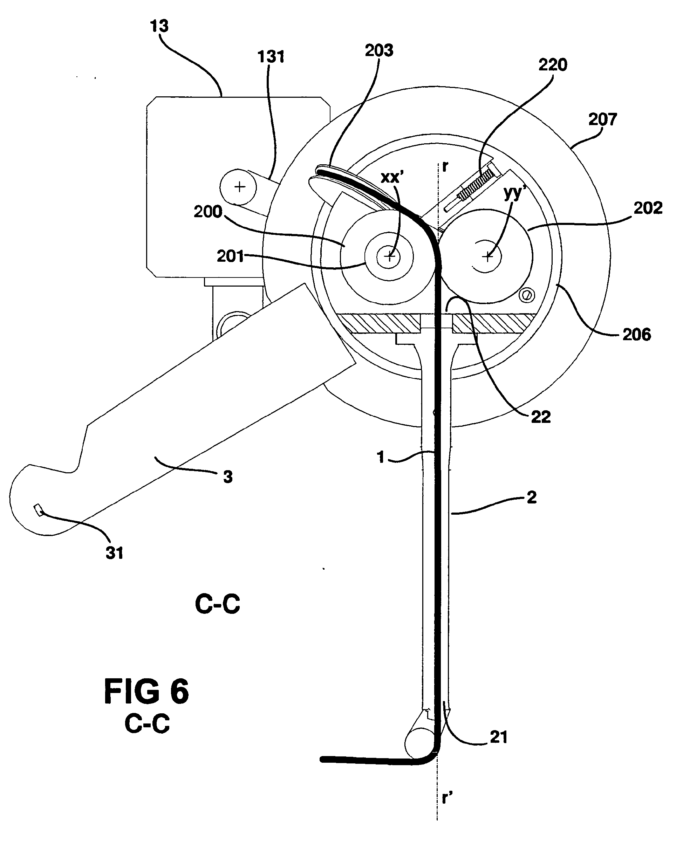

La description qui suit, s'appuie sur un mode particulier de mise en oeuvre de l'invention et sur les figures 1 à 7, dans lesquelles :
- la figure 1 représente une vue schématique d'un dispositif de pose selon l'art antérieur connu,
- la figure 2 représente une vue schématique d'un dispositif de pose selon l'invention selon un premier mode de réalisation de l'invention,
- la figure 3 représente une vue de dessus du dispositif précédent,
- la figure 4 représente une vue en coupe de coté selon AA dudit dispositif,
- la figure 5 représente une vue en coupe de coté selon BB dudit dispositif,
- la figure 6 représente une vue en coupe de coté selon CC dudit dispositif,
- la figure 7 représente une vue de dessus du dispositif sur laquelle le circuit du fil est visualisé,
- les figures 8 et 9 représentent deux positions de l'ensemble embarqué selon un mode de réalisation alternatif

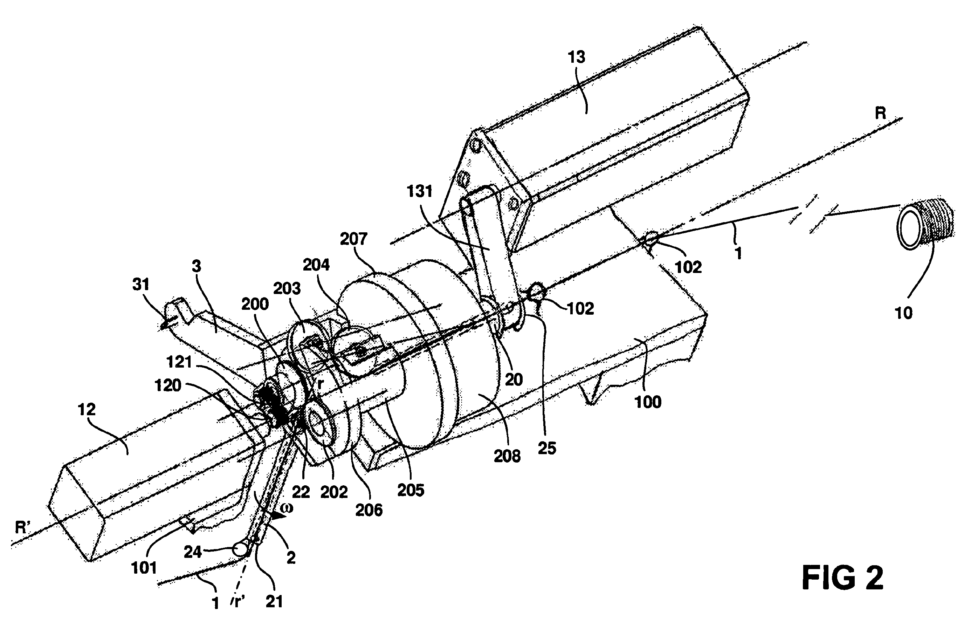

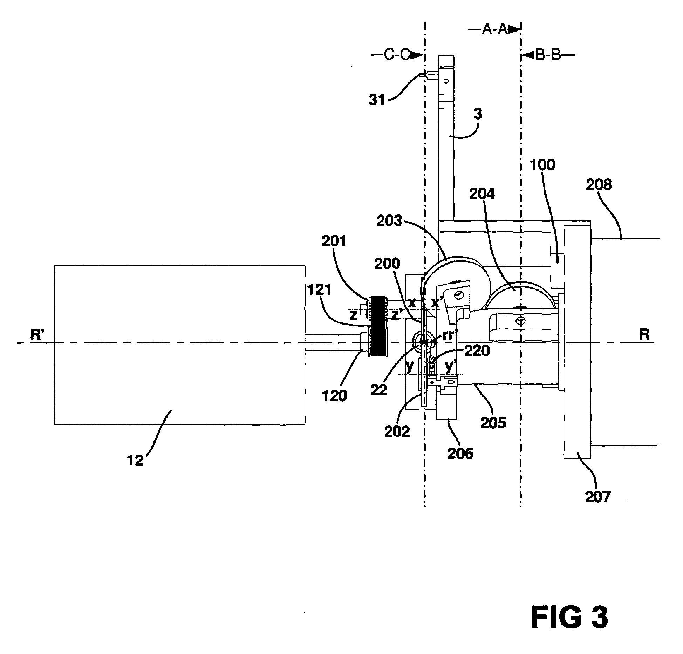

Le dispositif représenté sur les figures 2 et 3 comprend un moyen de stockage 10 du fil 1 à partir duquel le fil 1 est amené vers le dispositif de pose. Des oeillets 102 permettent d'aligner le fil avec la direction RR' de l'axe de rotation de l'ensemble rotatif portant le conduit rotatif 2.

Cet ensemble rotatif comprend un arbre creux (20, 205) s'étendant dans la direction de l'axe de rotation RR'. Ledit arbre creux est maintenu sur un châssis fixe 100 par l'intermédiaire d'une boite à roulement 208, fixée sur le châssis 100 par le flasque 207, de manière à autoriser la rotation libre de l'ensemble rotatif autour de l'axe RR'. Le fil 1 pénètre dans l'arbre creux par l'entrée 25, en suivant un parcours se confondant avec l'axe RR'. Un flasque 206 est placé à l'autre extrémité de l'arbre creux pour porter les éléments mécaniques formant le moyen d'appel.

Par l'intermédiaire d'une courroie 131, un premier moteur 13 entraîne en rotation ledit ensemble tournant à une vitesse contrôlée ω.

Une poulie motorisée 200, dont l'axe de rotation xx' est parallèle à l'axe RR', est placée de manière à ce que sa circonférence soit tangente à l'axe rr' du conduit rotatif 2 qui s'étend dans la direction radiale par rapport à l'axe RR'.

Il est donc nécessaire de placer, en amont de la poulie motorisée 200 lorsque l'on considère le sens de circulation du fil, des moyens aptes à faire subir au fil la variation de parcours et d'amener le fil 1 depuis un parcours se confondant avec l'axe de rotation RR' de l'ensemble rotatif jusqu'à la poulie motorisée 200 autour de laquelle ledit fil est embarré de manière à être entraîner

A cet effet, le fil est embarré autour d'une première poulie 204 dont la circonférence est tangente à l'axe de rotation RR', puis autour d'une seconde poulie 203 de manière à présenter le fil dans le plan de la poulie motorisée 200 autour duquel le fil est embarré et circule avant de pénétrer par l'ouverture 22 dans le conduit rotatif 2, en suivant un parcours se confondant avec l'axe rr' du conduit rotatif 2, jusqu'à la sortie 21 dudit conduit rotatif.

Sous l'effet d'un moyen élastique, tel qu'un ressort, 220, un galet presseur 202, dont l'axe de rotation yy' est parallèle à l'axe de rotation xx' de la poulie motorisé, exerce une pression radiale sur la circonférence de ladite poulie motorisée 200, de manière à éviter tout glissement du fil embarré autour de la poulie motorisée, et permettre ainsi un pilotage précis de la vitesse d'appel du fil.

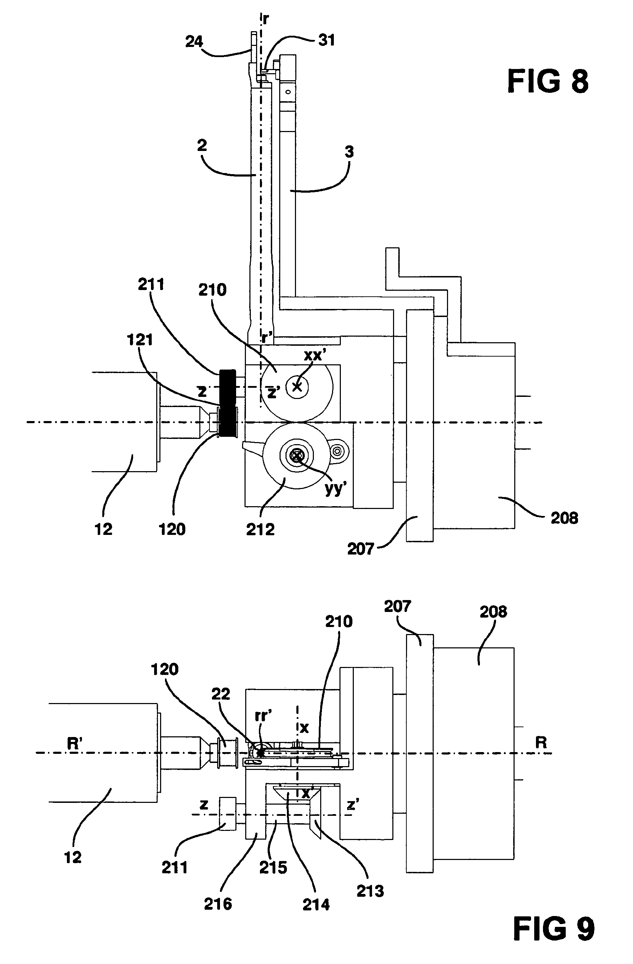

Une autre alternative de montage, est illustrée aux figures 8 et 9, dans lesquelles les organes identiques à ceux décrits ci-dessus sont repérés par les mêmes numéros d'identification. Selon cette alternative, la poulie motorisée 210 est disposée de telle façon que sa circonférence soit simultanément tangente à l'axe de rotation RR' et à l'axe du conduit rotatif rr'. Par voie de conséquence, l'axe xx' de la poulie rotative est perpendiculaire à l'axe de rotation RR'.

Selon cette alternative, il n'est pas nécessaire de dévier le parcours du fil qui arrive directement sur la poulie motorisée 210.

Selon l'une ou l'autre des alternatives décrites ci-dessus, il est nécessaire d'amener un couple moteur sur l'arbre portant la poulie motorisée de manière à lui conférer l'énergie mécanique nécessaire à la traction du fil depuis le moyen de stockage.

Une solution consisterait à embarquer sur l'arbre creux un moteur rotatif couplé mécaniquement à l'arbre de la poulie motorisée.

Toutefois, une des contraintes liée à la conception et à la réalisation de ce dispositif de pose réside dans le fait qu'il est nécessaire de réduire autant que faire se peut le temps de mise en mouvement des organes rotatifs de manière à ce que, lors d'un démarrage, le premier tronçon de fil délivré lors de la première rotation du conduit puisse être projeté sur la surface de réception avec les effets dynamiques suffisant pour assurer sa bonne mise en place.

Il en résulte que, lors du démarrage du dispositif, les accélérations subies par le fil et les différentes pièces en mouvement sont relativement importantes. En conséquence, on cherche à réduire les masses et les inerties des pièces embarquées sur l'ensemble rotatif de manière à réduire la puissance des moteurs.

Pour la raison explicitée ci-dessus, on disposera donc le moteur 12 d'entraînement en rotation de la poulie motorisée sur un bâti 101, fixe par rapport à l'ensemble rotatif comprenant la poulie motorisée 200 (210) et le conduit rotatif 2.

La transmission du couple moteur entre le moteur d'entraînement 12 non embarqué et la poulie motorisée 200 embarquée sur l'ensemble rotatif supportant la poulie motorisée, est opérée par un arbre moteur 120, dont l'axe est confondu avec l'axe de rotation RR'. Cet arbre moteur peut indifféremment être porté par l'ensemble moteur non embarqué ou par l'ensemble rotatif ou simultanément par les deux ensembles. Toutefois, dans les deux derniers cas, il conviendra de prévoir un jeu de roulement sur l'ensemble rotatif, entre l'arbre moteur et l'ensemble rotatif, de manière à rendre l'arbre moteur indépendant de la rotation de l'ensemble rotatif.

Aussi, toujours pour les raisons de masse embarquée et d'inertie évoquées ci-dessus, on préférera la solution dans laquelle l'arbre moteur 120 est porté par l'ensemble moteur non embarqué, comme cela est représenté sur les figures 2, 3, 8 et 9.

De manière à transmettre le couple moteur à la poulie motorisée depuis l'arbre moteur 120 il est prévu des moyens de transmission embarqués sur l'ensemble rotatif.

Lorsque l'axe xx' de la poulie motorisée est parallèle à l'axe de rotation RR' de l'ensemble rotatif, comme cela est représenté sur les figures 2 et 3, qui illustrent le mode préférentiel de mise en oeuvre de l'invention, les moyens de transmission peuvent être formés par un arbre de transmission 201 disposé sur l'ensemble rotatif. Cet arbre de transmission 201 dont l'axe de rotation zz' est parallèle à l'axe de rotation RR' peut être confondu avec l'axe xx' de la poulie motorisée, et l'arbre de transmission 201 est alors fixé directement sur la poulie motorisée 200.

L'arbre de transmission 201 est relié mécaniquement à l'arbre moteur 120 par l'intermédiaire d'une courroie 121 ou encore par des pignons dentés. On peut également imaginer que l'arbre moteur 120 soit formé par une roue à denture intérieure d'axe RR', qui circule autour d'un pignon formant l'arbre de transmission 201.

Selon le mode alternatif de réalisation de l'invention tel que représenté aux figures 8 et 9, lorsque l'axe xx' de la poulie motorisée 210 est perpendiculaire à l'axe RR' de rotation de l'ensemble rotatif, il est nécessaire de prévoir des moyens de transmission, tels que des pignons de renvoi 213, 214, montés sur un palier 216 solidaire de l'ensemble rotatif, pour transmettre le couple moteur depuis l'arbre moteur 120 jusqu'à la poulie motorisée 210 par l'intermédiaire de la courroie de transmission 121 et de l'arbre de transmission embarqué 211, dont l'axe zz' est parallèle à l'axe RR' et perpendiculaire à l'axe xx'.

Les moyens de coupe du fil comprennent un bras 3 au bout duquel est disposée la lame 3 d'un couteau qui en collaborant avec la contre-lame 24 sectionne le tronçon de fil à chaque tour du conduit rotatif.

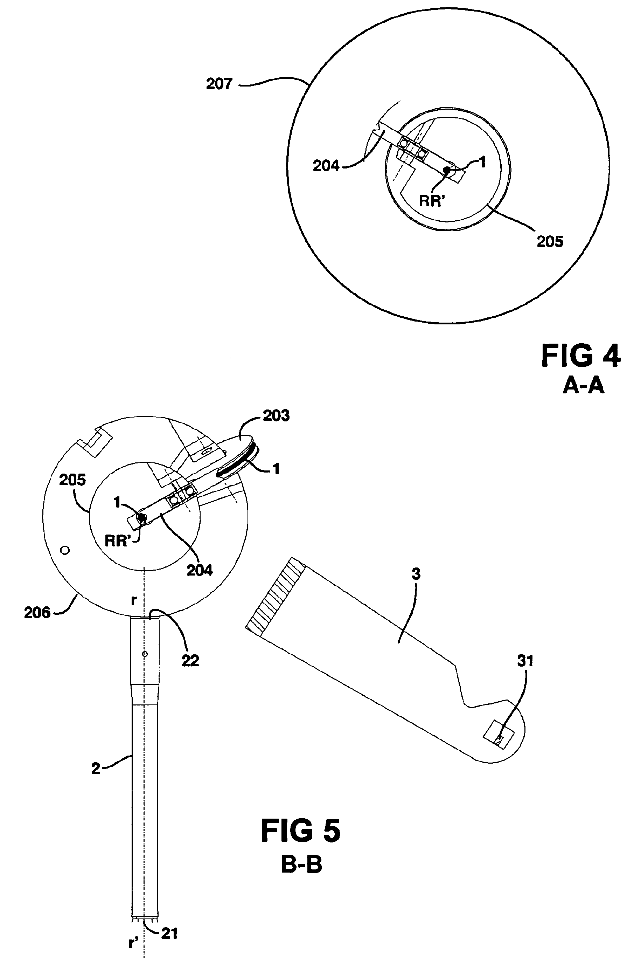

Les figures 4 5 et 6 sont des vues en coupe de coté selon les directions A-A, B-B et C-C du dispositif représenté aux figures 2 et 3 sur lesquels sont illustrés les principaux organes d'un dispositif de pose selon l'invention.

Ces différentes figures permettent également de visualiser la trace du fil 1 lors de son passage dans le dispositif.

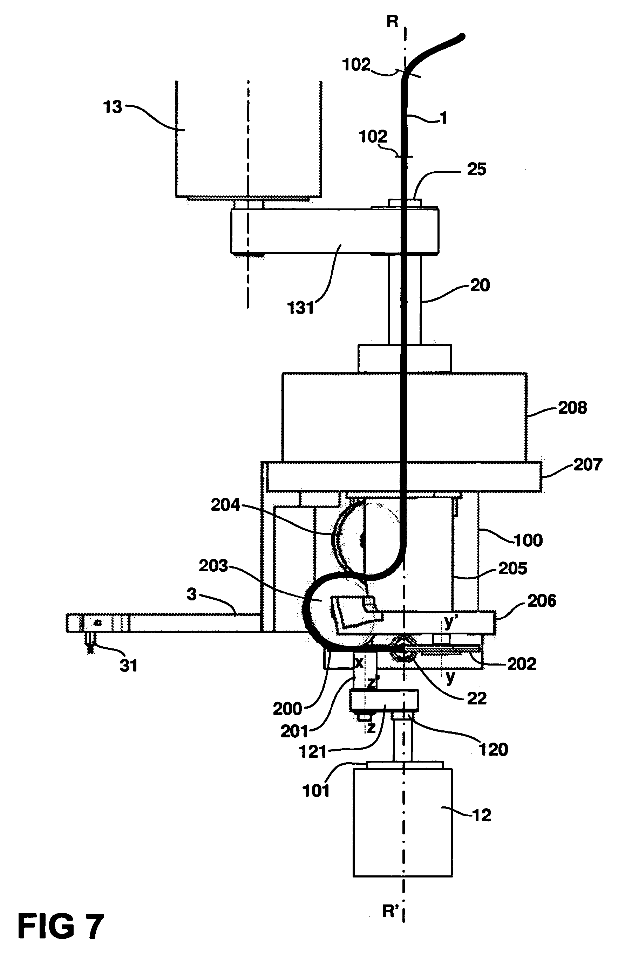

La figure 7 représente une vue de dessus du parcours du fil (en trait gras), rectiligne dans le tube creux 20, puis embarré successivement autour des poulies 204, 203, 200 et 202, puis à nouveau rectiligne dans le conduit rotatif 2.

On observera que ces deux types de montage sont similaires à celui d'un train épicycloïdal, et confèrent au dispositif une propriété intéressante supplémentaire.

En effet, lorsque le moteur 13 entraîne en rotation l'ensemble rotatif, il met en rotation l'arbre creux 20, 205 ainsi que le conduit 2 autour de l'axe RR'. A partir de cet instant, si le moteur rotatif 12 reste à l'arrêt, et que l'arbre moteur 120 est immobile en rotation, la poulie motorisée 200, (210) est entraînée par la liaison mécanique entre la poulie motorisé et l'arbre 120 qui est arrêté, et tourne autour de son axe xx'.

La poulie motorisée va donc appeler une longueur de fil égale à la longueur de la développée de sa circonférence multiplié par le nombre de tour qu'elle va effectuer pendant cette rotation de 360° de l'ensemble rotatif..

Lors du démarrage du dispositif, et lors du premier tour effectué par le conduit rotatif, les problèmes d'accélération des moyens d'appel sont minimisés en ce que l'accélération de la poulie motorisée se fait de manière combinée par l'intermédiaire du moteur 13 d'entraînement de l'ensemble rotatif d'une part, et par le moteur d'entraînement 12 de la poulie motorisée d'autre part, ce qui a pour effet de réduire le patinage du fil dans la gorge de la poulie motorisé 200.

Il est également possible de choisir convenablement le diamètre de l'arbre moteur 120 et des éléments composant le moyen de transmission embarqué tel que le diamètre de l'arbre 201 (211) ou des pignons de renvoi (213 et 214) en fonction du diamètre de la poulie motorisée 200 (210) de sorte que, à chaque tour de l'ensemble rotatif autour de son axe de rotation RR', la poulie motorisée effectue un nombre de tours déterminé sur elle-même de manière à entraîner l'appel d'une longueur de fil prédéterminée et correspondant précisément à la longueur de fil à déposer sur la surface de réception. Le moteur 13 devient alors inutile. Et le choix de la longueur à poser se fait par le choix des rapports d'entraînement entre l'arbre 120 qui est fixe et les éléments formant le moyen de transmission.

Les dispositifs faisant l'objet de la présente description correspondent à un dispositif conforme à l'invention, et dans lequel les choix technologiques ont été fait en vue de la meilleure optimisation dudit dispositif. Il va de soi que les alternatives de montage proposées permettent d'obtenir un résultat final similaire.

## Revendications

1. Dispositif de fabrication d'un renforcement à partir d'un fil déposé directement à sa place finale en projetant des tronçons dudit fil sur une surface de réception ledit dispositif comprenant :
- un moyen d'appel (200) du fil (1) à partir d'une source de fil (10),
- un ensemble rotatif comprenant un conduit rotatif (2) d'axe rr', fixé sur un arbre creux (20, 205) constituant l'axe de rotation (RR') dudit conduit (2) de manière telle que, l'extrémité radiale extérieure (21) dudit conduit (2) soit orientée sensiblement radialement par rapport à l'axe de rotation de l'arbre creux (RR'), ledit conduit recevant le fil (1) par son extrémité centrale (22) opposée à ladite extrémité radiale extérieure (21) en provenance desdits moyens d'appel, ledit fil sortant par ladite extrémité radiale extérieure (21), lesdits moyens d'appel contrôlant la vitesse linéaire d'avance du fil à l'intérieur dudit conduit rotatif (2),
- des moyens (13, 131) pour entraîner en rotation l'arbre creux,
- des moyens pour sectionner le fil (31) agissant sur le fil de façon à libérer un tronçon à chaque tour dudit conduit rotatif (2).
**caractérisé en ce que** ledit moyen d'appel comprend une poulie motorisée (200), portée par l'arbre creux, dont la circonférence est tangente à l'axe (rr') du conduit rotatif (2), et autour de laquelle le fil est embarré avant de s'engager directement dans l'entrée (22) du conduit rotatif (2), lorsque le dispositif est en fonctionnement.

2. Dispositif selon la revendication 1, dans lequel le couple moteur est transmis à la poulie motorisée (200, 210) par un moteur rotatif (12) disposé sur un bâti fixe (101) par rapport à l'ensemble rotatif.

3. Dispositif selon la revendication 2, dans lequel le couple moteur est transmis, par l'intermédiaire d'un arbre moteur (120) dont l'axe se confond avec l'axe de rotation (RR') dudit ensemble rotatif, à des moyens de transmission (201, 211) rotatifs d'axe (zz',) disposés sur l'ensemble rotatif, et reliés mécaniquement à la poulie motorisée (200, 210).

4. Dispositif selon la revendication 3, dans lequel l'axe (zz') du moyen de transmission (201, 211) est parallèle à l'axe de rotation (RR') dudit ensemble rotatif.

5. Dispositif selon la revendication 4, dans lequel la transmission de l'effort moteur entre l'arbre moteur (120) et le moyen de transmission embarqué (201, 211) se fait par l'intermédiaire d'une courroie (121).

6. Dispositif selon la revendication 4 dans lequel la transmission de l'effort moteur entre l'arbre moteur (120) et le moyen de transmission embarqué (201, 211) se fait par l'intermédiaire de pignons dentés.

7. Dispositif selon l'une des revendications 4 à 6, dans lequel l'axe de rotation (xx') de la poulie motorisée (200) est parallèle à l'axe de rotation (RR') dudit l'ensemble rotatif.

8. Dispositif selon la revendication 7, dans lequel l'axe (zz') dudit moyen de transmission (201) est confondu avec l'axe (xx') de la poulie motorisée (200).

9. Dispositif selon l'une des revendications 7 ou 8, dans lequel des poulies de renvoi (203, 204) disposées sur l'arbre creux (20, 205), sont agencées de telle sorte qu'elles permettent d'amener le fil (1) depuis une direction se confondant avec l'axe de rotation RR' de l'ensemble rotatif jusqu'à la poulie motorisée (200) autour de laquelle ledit fil (1) est embarré avant de pénétrer dans le conduit rotatif (2).

10. Dispositif selon l'une des revendication 4 ou 6, dans lequel l'axe de rotation (xx') de la poulie motorisée est perpendiculaire à l'axe de rotation (RR') de l'ensemble rotatif et dans lequel la circonférence de la poulie motorisée (200) est également tangente à l'axe de rotation (RR') de l'ensemble rotatif et à l'axe (rr').

11. Dispositif selon la revendication 10, dans lequel les moyens de transmission sont formés par des pignons de renvoi (211, 213, 214, 215).

12. Dispositif selon l'une des revendications 4 à 11, dans lequel l'arbre moteur (120) est immobile en rotation, et dans lequel le diamètre de l'arbre moteur (120) et le diamètre des éléments formant les moyens de transmission (201, 211, 213, 214), sont adaptés au diamètre de la poulie motorisée (200, 210) pour que, à chaque tour de l'ensemble rotatif autour de son axe de rotation (RR'), le nombre de tours effectué par ladite poulie motorisée (200, 210) entraîne l'appel d'une longueur de fil prédéterminée.

13. Dispositif selon l'une des revendications 1 à 12, dans lequel un galet presseur (202, 212), libre en rotation autour de son axe de rotation (yy') parallèle à l'axe de rotation (xx') de la poulie motorisée (110, 210), exerce une pression radiale sur la circonférence de la poulie motorisée sous l'action d'un élément élastique (220).

## Claims

1. Device for manufacturing a reinforcement from a thread laid directly in its final place by casting lengths of the said thread onto a receiving surface, the said device comprising:
- a feed means (200) for feeding the thread (1) from a source of thread (10),
- a rotary assembly comprising a rotary guide (2) of axis rr' fixed to a hollow shaft (20, 205) constituting the axis of rotation (RR') of the said guide (2) so that the outer radial end (21) of the said guide (2) is directed substantially radially with respect to the axis of rotation of the hollow shaft (RR'), the said guide receiving the thread (1) that comes from the said feed means via its central end (22) that is the opposite end to the said outer radial end (21), the said thread leaving via the said outer radial end (21), the said feed means controlling the linear speed at which the thread advances inside the said rotary guide (2),
- means (13, 131) for rotating the hollow shaft,
- means (31) for cutting the thread, acting on the thread in such a way as to part off one length for each revolution of the said rotary guide (2),
**characterized in that** the said feed means comprises a motorized pulley (200), borne by the hollow shaft, the circumference of which is tangential to the axis (rr') of the rotary guide (2), and about which pulley the thread is wound before it directly enters the inlet (22) of the rotary guide (2) when the device is in operation.

2. Device according to Claim 1, in which the driving torque is transmitted to the rotary pulley (200, 210) by a rotary motor (12) positioned on a stand (101) that is fixed in relation to the rotary assembly.

3. Device according to Claim 2, in which the driving torque is transmitted, via a drive shaft (120) the axis of which coincides with the axis of rotation (RR') of the said rotary assembly, to rotary transmission means (201, 211) of axis (zz') positioned on the rotary assembly and mechanically connected to the motorized pulley (200, 210).

4. Device according to Claim 3, in which the axis (zz') of the transmission means (201, 211) is parallel to the axis of rotation (RR') of the said rotary assembly.

5. Device according to Claim 4, in which the driving torque is transmitted between the drive shaft (120) and the on-board transmission means (201, 211) by means of a belt (121).

6. Device according to Claim 4, in which the driving force is transmitted between the drive shaft (120) and the on-board transmission means (201, 211) via toothed pinions.

7. Device according to one of Claims 4 to 6, in which the axis of rotation (xx') of the motorized pulley (200) is parallel to the axis of rotation (RR') of the said rotary assembly.

8. Device according to Claim 7, in which the axis (zz') of the said transmission means (201) coincides with the axis (xx') of the motorized pulley (200).

9. Device according to one of Claims 7 and 8, in which deflecting transmission pulleys (203, 204) positioned on hollow shafts (20, 205) are arranged in such a way that they lead the thread (1) from a direction that coincides with the axis of rotation RR' of the rotary assembly as far as the motorized pulley (200) around which the said thread (1) is wound before it enters the rotary guide (2).

10. Device according to one of Claims 4 or 6, in which the axis of rotation (xx') of the motorized pulley is perpendicular to the axis of rotation (RR') of the rotary assembly and in which the circumference of the motorized pulley (200) is also tangential to the axis of rotation (RR') of the rotary assembly and to the axis (rr').

11. Device according to Claim 10, in which the transmission means are formed by deflecting transmission pinions (211, 213, 214, 215).

12. Device according to one of Claims 4 to 11, in which the drive shaft (120) is unable to rotate, and in which the diameter of the drive shaft (120) and the diameter of the elements that form the transmission means (201, 211, 213, 214) are tailored to the diameter of the motorized pulley (200, 210) so that, for each revolution of the rotary assembly about its axis of rotation (RR'), the number of revolutions effected by the said motorized pulley (200, 210) feeds a predetermined length of thread.

13. Device according to one of Claims 1 to 12, in which a press roller (202, 212), free to rotate about its axis of rotation (yy') parallel to the axis of rotation (xx') of the motorized pulley (110, 210), applies radial pressure to the circumference of the motorized pulley under the action of an elastic element (220).

## Patentansprüche

1. Vorrichtung zur Herstellung einer Verstärkung aus einem Faden, der direkt an seinem endgültigen Platz abgelagert wird, indem Teilstücke des Fadens auf eine Aufnahmefläche geschleudert werden, wobei die Vorrichtung Folgendes umfasst:
- ein Mittel zum Einzug (200) des Fadens (1) aus einer Fadenquelle (10),
- eine drehbare Anordnung mit einem drehbaren Rohr (2) mit einer Achse rr', das an einer Hohlwelle (20, 205) befestigt ist, die die Drehachse (RR') des Rohrs (2) bildet, derart, dass das äußere radiale Ende (21) des Rohrs (2) im Wesentlichen radial in Bezug auf die Drehachse der Hohlwelle (RR') orientiert ist, wobei das Rohr durch sein zentrales Ende (22), das zum äußeren radialen Ende (21) entgegengesetzt ist, den Faden (1), von den Einzugsmitteln her kommend, aufnimmt, wobei der Faden durch das äußere radiale Ende (21) austritt, wobei die Einzugsmittel die lineare Verfahrgeschwindigkeit des Fadens im Inneren des drehbaren Rohrs (2) steuern,
- Mittel (13, 131) zum rotatorischen Antreiben der Hohlwelle,
- Mittel zum Unterteilen des Fadens (31), die in der Weise auf den Faden einwirken, dass bei jeder Umdrehung des drehbaren Rohrs (2) ein Teilstück freigesetzt wird,
**dadurch gekennzeichnet, dass** das Einzugsmittel eine durch die Hohlwelle getragene motorisch angetriebene Scheibe (200) enthält, deren Umfang zur Achse (rr') des drehbaren Rohrs (2) tangential ist und um den der Faden der Faden bewegt wird, bevor er direkt in den Einlass (22) des drehbaren Rohrs (2) gelangt, wenn die Vorrichtung in Betrieb ist.

2. Vorrichtung nach Anspruch 1, wobei das Antriebsmoment durch einen Rotationsmotor (12), der an einem in Bezug auf die drehbare Einheit festen Rahmen (101) angeordnet ist, auf die motorisch angetriebene Scheibe (200, 210) übertragen wird.

3. Vorrichtung nach Anspruch 2, wobei das Antriebsmoment über eine Antriebswelle (120), deren Achse sich mit der Drehachse (RR') der drehbaren Einheit deckt, auf drehbare Übertragungsmittel (201, 211) mit einer Achse (zz') übertragen wird, die an der drehbaren Einheit angeordnet und mit der motorisch angetriebenen Scheibe (200, 210) mechanisch verbunden sind.

4. Vorrichtung nach Anspruch 3, wobei die Achse (zz') des Übertragungsmittels (201, 211) zur Drehachse (RR') der drehbaren Einheit parallel ist.

5. Vorrichtung nach Anspruch 4, wobei die Übertragung der Antriebskraft zwischen der Antriebswelle (120) und dem eingebauten Übertragungsmittel (201, 211) über einen Riemen (121) erfolgt.

6. Vorrichtung nach Anspruch 4, wobei die Übertragung der Antriebskraft zwischen der Antriebswelle (120) und dem eingebauten Übertragungsmittel (201, 211) über Zahnritzel erfolgt.

7. Vorrichtung nach einem der Ansprüche 4 bis 6, wobei die Drehachse (xx') der motorisch angetriebenen Scheibe (200) zur Drehachse (RR') der drehbaren Einheit parallel ist.

8. Vorrichtung nach Anspruch 7, wobei sich die Drehachse (zz') des Übertragungsmittels (201) mit der Achse (xx') der motorisch angetriebenen Scheibe (200) deckt.

9. Vorrichtung nach einem der Ansprüche 7 oder 8, wobei Umlenkscheiben (203, 204), die an der Hohlwelle (20, 205) angeordnet sind, so beschaffen sind, dass sie das Führen des Fadens (1) aus einer Richtung, die mit der Drehachse RR' der drehbaren Einheit übereinstimmt, bis zur motorisch angetriebenen Scheibe (200), um die der Faden (1) bewegt wird, bevor er in das drehbare Rohr (2) eintritt, ermöglicht.

10. Vorrichtung nach einem der Ansprüche 4 oder 6, wobei die Drehachse (xx') der motorisch angetriebenen Scheibe zur Drehachse (RR') der drehbaren Einheit senkrecht ist und wobei der Umfang der motorisch angetriebenen Scheibe (200) gleichfalls zur Drehachse (RR') der drehbaren Einheit und zur Achse (rr') tangential ist.

11. Vorrichtung nach Anspruch 10, wobei die Übertragungsmittel durch Vorgelegezahnräder (211, 213, 214, 215) gebildet sind.

12. Vorrichtung nach einem der Ansprüche 4 bis 11, wobei die Antriebswelle (120) drehfest ist und wobei der Durchmesser der Antriebswelle (120) und der Durchmesser der Elemente, die die Übertragungsmittel (201, 211, 213, 214) bilden, an den Durchmesser der motorisch angetriebenen Scheibe (200, 210) angepasst sind, damit bei jeder Umdrehung der drehbaren Einheit um ihre Drehachse (RR') die Anzahl von durch die motorisch angetriebene Scheibe (200, 210) ausgeführten Umdrehungen den Einzug einer vorgegebenen Fadenlänge mit sich bringt.

13. Vorrichtung nach einem der Ansprüche 1 bis 12, wobei eine Andruckrolle (202, 212), die sich um ihre zur Drehachse (xx') der motorisch angetriebenen Scheibe (110, 210) parallele Drehachse (yy') frei drehen kann, unter der Einwirkung eines elastischen Elements (220) einen radialen Druck auf den Umfang der motorisch angetriebenen Scheibe ausübt.
